# EUROPÄISCHE PATENTSCHRIFT

(11) **EP 2 663 779 B1**
(45) Veröffentlichungstag und Bekanntmachung des Hinweises auf die Patenterteilung: **25.07.2018**
(21) Anmeldenummer: 12700280.6
(22) Anmeldetag: 12.01.2012
(51) Int. Cl.: F16B 25/00, F16B 25/10

(54) **SCHRAUBE**
SCREW
VIS

(30) Priorität: 14.01.2011 DE 102011002723
(43) Veröffentlichungstag der Anmeldung: 20.11.2013
(73) Patentinhaber: SWG Schraubenwerk Gaisbach GmbH, 74638 Waldenburg (DE)
(72) Erfinder: STIEBITZ, Günter, 74638 Waldenburg (DE)
(74) Vertreter: Patentanwälte Ruff, Wilhelm, Beier, Dauster & Partner mbB
(86) Internationale Anmeldenummer: PCT/EP2012/050415
(87) Internationale Veröffentlichungsnummer: WO 2012/095479

(56) Entgegenhaltungen:
- GB-A- 2 289 317
- JP-A- 10 281 125
- US-A- 4 878 788

## Beschreibung

Die Erfindung betrifft eine selbstbohrende und gewindeformende Schraube.

Seit langem sind selbstbohrende und gewindeformende Schrauben bekannt, die sich in dem Material, in das sie eingeschraubt werden sollen, ein Loch bohren und anschließend ein Gewinde formen. Dies erleichtert die Montage wesentlich, da die getrennten Vorgänge des Bohrens eines Lochs, des Schneidens eines Gewindes und des Einschraubens der Schraube durch einen einzigen Vorgang ersetzt werden.

Eine bekannte selbstbohrende und gewindeformende Schraube dieser Art weist einen Bohrkopf auf, der zwei parallel zur Querabmessung verlaufende Schneidkanten enthält. Diese Schneidkanten verlaufen in an sich bekannter Weise gegeneinander versetzt. In der Seitenansicht der Schraube weisen sie einen Spitzenwinkel auf. Die Schneidkanten verlaufen von einer stegartigen Spitze der Schraube ausgehend bis zu ihrem radial äußeren Ende geradlinig (DE 1625417).

Weiterhin ist eine Selbstbohrschraube bekannt, die an ihrer Bohrspitze eine erste von der Längsachse der Schraube ausgehende Schneide aufweist, die sich über etwa die Hälfte des Radius der Bohrspitze erstreckt. Auf der diametral gegenüberliegenden Seite hat die Bohrspitze eine zweite Schneide, die sich von etwa der Hälfte des Radius der Bohrspitze nach außen erstreckt (DE 10 2007 000848 A1). Beide Schneiden haben etwa den gleichen Winkel gegenüber der Längsachse.

**Es ist bereits eine Schraube mit einem selbstschneidenden Bohrkopf bekannt, der in einem näher an der Schraubenlängsachse gelegen Bereich zwei geradlinige Schneidkanten aufweist, die miteinander einen kleineren Winkel einschließen als in einem sich daran anschließenden bis zur Außenseite des Bohrkopfs reichenden Bereich (**GB 2289317 A**). Der Bohrkopf hat keine Spitze.**

**Eine ähnliche Schraube mit einer Schraubenspitze ist ebenfalls bekannt, bei der die Schneidkanten innerhalb des von der Spitze ausgehenden Bereichs einen deutlich kleineren Winkel miteinander einschließen als in dem sich anschließenden Bereich (**JP 10-281125**).**

**Ebenfalls bekannt ist ein Bohrer, dem Bereich seines vorderen Endes einen Abschnitt mit zwei Schneidkanten aufweist, der einen kleineren Durchmesser als der Bohrer aufweist. In diesem Abschnitt schließen die Schneidkanten einen kleineren Winkel miteinander ein als in dem restlichen bis zum Außendurchmesser des Bohrers reichenden Bereich (**US 4878788**).**

Der Erfindung liegt die Aufgabe zu Grunde, eine Schraube zu schaffen, die ein besseres Bohrverhalten der Bohrspitze aufweist und sowohl für Handverschraubungen als auch Automatenverschraubungen geeignet ist.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die von der Erfindung vorgeschlagene Schraube weist also einen Bohrkopf auf, dessen Schneidkanten nicht mehr längs einer Geraden verlaufen, sondern abgewinkelt sind, so dass im Bereich der Spitze der Schraube die Schneidkanten stärker abfallen als im restlichen Bereich. Dies führt dazu, dass zunächst ein kleineres Loch mit einer größeren Umfangsgeschwindigkeit erzeugt und später dieses führende Loch dann mit dem äußeren Abschnitt der Schneidkante aufgebohrt wird.

Im Gegensatz zu der eingangs genannten Schraube enthält die von der Erfindung vorgeschlagene Schraube eine richtige Spitze, so dass die Schraube gegen seitliches Abrutschen auch dann gesichert ist, wenn sie nur mit geringem Druck angesetzt wird.

Es hat sich als besonders sinnvoll herausgestellt, dass der Winkel zwischen der Längsachse und der Schneidkante im ersten Abschnitt zwischen etwa 40 und 50° liegt. Dies führt zu einem Spitzenwinkel von grob gesprochen 90°, einen Wert, der deutlich kleiner ist als der Spitzenwinkel bei den bekannten selbstbohrenden Schrauben.

In Weiterbildung der Erfindung kann vorgesehen sein, dass der Winkel zwischen der Längsachse der Schraube und der Schneidkante in dem erwähnten zweiten Abschnitt in einem Bereich zwischen etwa 60 und 80° liegt.

In nochmaliger Weiterbildung der Erfindung **ist** vorgesehen, dass der Bohrkopf in Längsrichtung der Schraube verlaufende Nebenschneidkanten aufweist, die sich an die Schneidkanten anschließen. Diese sorgen dafür, dass die Ränder des erzeugten Bohrlochs sauber geglättet werden. Dies führt zu einem besseren Einformen des Gewindes durch das sich an den Bohrkopf anschließende Gewinde.

In nochmaliger Weiterbildung der Erfindung **ist** vorgesehen, dass die Nebenschneidkanten durch die Schnittkante zweier einen Winkel von etwa 25 bis 35° einschließender Flächen gebildet sind. Eine dieser Flächen ist die radiale Begrenzungswand des Bohrkopfs, und die andere Fläche ist die in Drehrichtung vor der Schneidkante liegende Fläche, die als in Längsrichtung des Bohrkopfs verlaufende Nut ausgebildet sein kann.

Erfindungsgemäß kann vorgesehen sein, dass die axiale Erstreckung des Bohrkopfs etwa dem zweifachen bis dreifachen der Steigung des Schraubengewindes entspricht. Die axiale Erstreckung des Bohrkopfs bestimmt die Dicke des Blechs, in das die Schraube eingeschraubt werden kann. Denn sobald das Gewinde in das Loch eingreift, muss das Loch vollständig hergestellt sein, da der durch das Gewinde erzeugte Vorschub der Schraube größer ist als der Vorschub, der beim Bohren möglich ist.

In Weiterbildung der Erfindung kann vorgesehen sein, dass der Durchmesser oder die Quererstreckung des Bohrkopfs in Richtung der Schneidkanten mindestens so groß ist wie der Durchmesser des Schafts und kleiner als der Spitzendurchmesser des Schraubengewindes.

In der Richtung quer zu dieser Richtung ist die Quererstreckung des Bohrkopfs vorzugsweise deutlich kleiner als der Durchmesser des Schafts und liegt beispielsweise im Bereich von zwei Dritteln des Durchmessers des Schafts. Dadurch wird ausreichend Platz geschaffen, um die beim Bohren entstehenden Späne aus dem Bohrloch heraus zu befördern.

In Weiterbildung der Erfindung kann vorgesehen sein, dass die Nebenschneidkanten parallel zur Längsrichtung der Schraube verlaufen. Auch die radial außen angeordneten Flächen des Bohrkopfs verlaufen vorzugsweise parallel zur Längsrichtung der Schraube, so dass der Bohrkopf mindestens angenähert zylindrisch aussieht.

Erfindungsgemäß kann in Weiterbildung vorgesehen sein, dass der Abstand der radial äußeren Enden der von der Spitze ausgehenden Abschnitte der Schneidkanten voneinander zwischen etwa 70 % und etwa 80 % der Quererstreckung des Bohrkopfs entspricht

Insbesondere kann in Weiterbildung vorgesehen sein, dass der Winkel zwischen der Längsachse der Schraube und der Schneidkante im zweiten Abschnitt um etwa 25° größer ist als der Winkel zwischen der Längsachse der Schraube und der Schneidkante im ersten Abschnitt.

Weitere Merkmale, Einzelheiten und Vorzüge der Erfindung ergeben sich aus den Ansprüchen, der folgenden Beschreibung bevorzugter Ausführungsformen der Erfindung sowie anhand der Zeichnung. Hierbei zeigen:
- Figur 1: eine Seitenansicht einer Schraube nach der Erfindung;
- Figur 2: eine Seitenansicht der Schraube aus einer um 90° versetzten Richtung;
- Figur 3: in vergrößertem Maßstab einen **Querschnitt** durch **den Bohrkopf** der Schraube;
- Figur 4: in stark vergrößertem Maßstab eine Seitenansicht des Bohrkopfs der Schraube;
- Figur 5: in einen der Figur 4 entsprechenden Maßstab eine Stirnansicht des Bohrkopfs der Schraube.

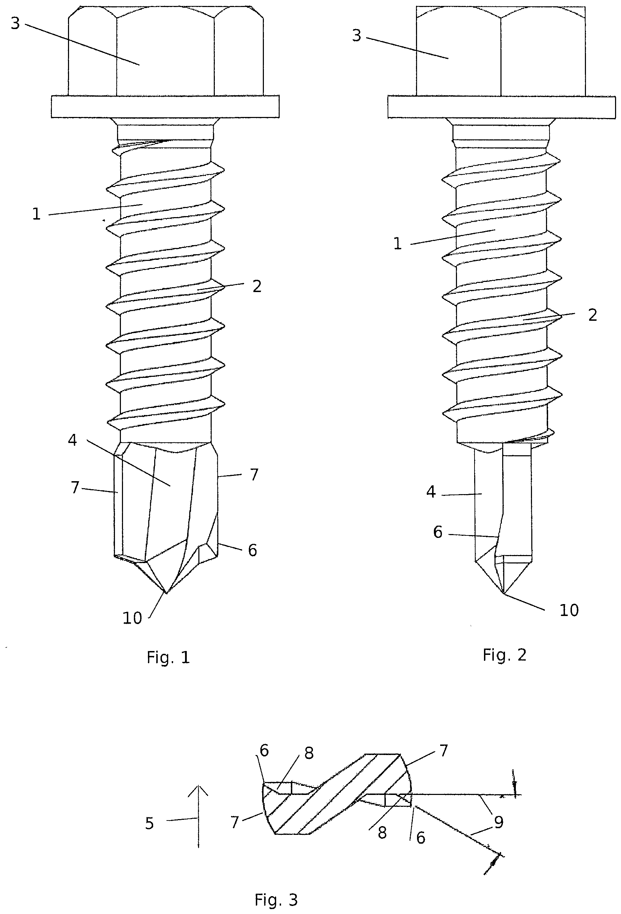

Die in den Figuren 1 und 2 dargestellte Schraube enthält einen Schraubenschaft 1, der mit einem Gewinde 2 versehen ist. An dem einen Ende der Schraube, in Figur 1 und Figur 2 oben, ist ein Schraubenkopf 3 ausgebildet, der eine Sechskantform aufweist. Der Schraubenkopf dient zum Ansetzen eines Werkzeugs, um die Schraube zu verdrehen.

An dem gegenüberliegenden Ende der Schraube ist ein Bohrkopf 4 ausgebildet, der beispielsweise durch Kaltverformung hergestellt ist. Die Außenseiten des Bohrkopfs 4, so wie er in Figur 1 dargestellt ist, verlaufen parallel zu der Längsachse der Schraube. Das gleiche gilt für die in Figur 2 zu sehenden äußeren Begrenzungslinien des Bohrkopfs 4.

Die Figur 3 zeigt nun einen Querschnitt durch den Bohrkopf 4 der Schraube. Die Einschraubrichtung ist durch den Pfeil 5 dargestellt. An dem Bohrkopf 4 sind zwei parallel zur Längsrichtung der Schraube verlaufende Nebenschneidkanten 6 ausgebildet. Die Nebenschneidkanten 6 werden durch die Schnittkante der Außenfläche 7 des Bohrkopfs 4 einerseits und eine innere Fläche 8 des Bohrkopfs 4 gebildet. Diese beiden Flächen 7 und 8 schließen einen Winkel 9 ein, dessen Ergänzungswinkel zu 90° etwa 25 bis 35° beträgt.

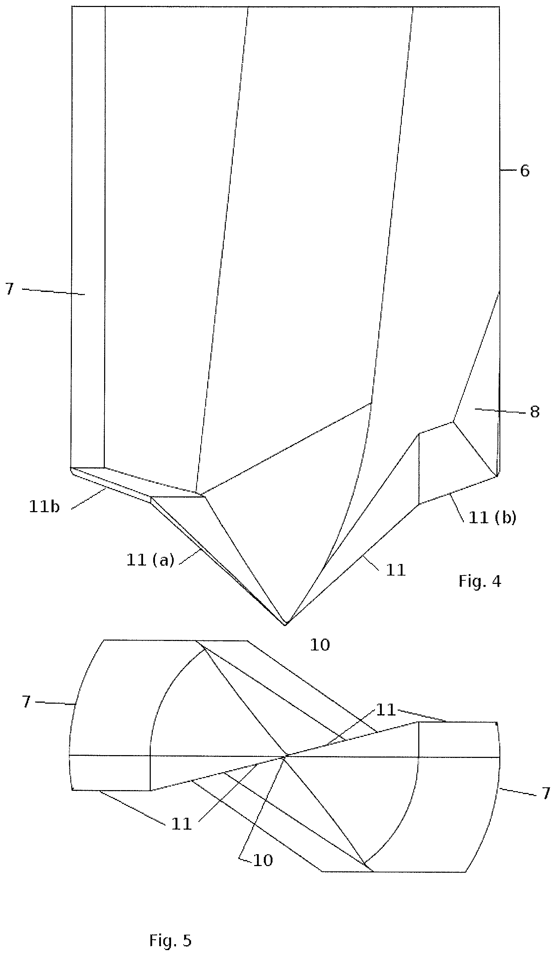

Die Spitze 10 des Bohrkopfs 4 ist als echte Spitze ausgebildet, so dass die Schraube beim Ansetzen sich durch die Spitze 10 zentriert und gegen seitliches Ausweichen gesichert ist. Um die Einzelheiten des Bohrkopfs weiter zu erläutern, wird jetzt auf die Figur 4 und die Figur 5 Bezug genommen. Zunächst zu der Figur 4. Hier sind die Schneidkanten 11 des Bohrkopfs 4 zu sehen. In einem ersten Abschnitt 11a, der an der Spitze 10 beginnt, verlaufen die Schneidkanten 11 unter einem Winkel gegenüber der Längsachse, der im Bereich von 40 bis 50° liegt. An diesen ersten geradlinigen Abschnitt 11a schließt sich ein Abschnitt 11b an, in dem die Schneidkanten 11 flacher verlaufen, also mit der Längsachse der Schraube einen größeren Winkel einschließen, der beispielsweise im Bereich von etwa 60 bis 80° liegt.

Die radiale Erstreckung des ersten Abschnitts 11 a beträgt etwa 60 % des Radius des Bohrkopfs bzw. des herzustellenden Lochs, so dass die radiale Erstreckung des zweiten Abschnitts 11b etwa 40 % beträgt.

Weiterhin ist der Figur 5 zu entnehmen, dass die Schneidkanten 11 im ersten Bereich 11a in der Projektion auf einer durchgehenden Geraden liegen, während die Schneidkanten 11 im zweiten Bereich 11b parallel und versetzt zueinander verlaufen.

Bei einem Einschraubvorgang, der mit dem Herstellen des Lochs beginnt, wird zunächst mit den Schneidkanten 11 im ersten Abschnitt 11a relativ schnell ein kleines Loch erzeugt, da hier einerseits wegen des kleineren Radius die Gegenkräfte kleiner sind und andererseits der Winkel zwischen den Schneidkanten 11 spitzer. Erst anschließend wird in einem langsameren Vorschub das Loch auf seine endgültige Größe auf gebohrt. Beim Aufbohren wirken dann die Nebenschneidkanten 6 bei der Glättung der Wände des Lochs mit. Diese Nebenschneidkanten 6 schließen an die radial äußeren Enden der Hauptschneidkanten 11 an.

## Patentansprüche

1. Schraube, mit
1.1 einem Schraubenantriebsende,
1.2 einem Schraubenschaft (1),
1.3 einem Schraubengewinde (2) sowie mit
1.4 einem Bohrkopf (4), der
1.5 zwei von einer Spitze (10) der Schraube ausgehende Schneidkanten (11) aufweist, wobei
1.6 jede Schneidkante (11) einen ersten von der Spitze (10) ausgehenden geradlinigen Abschnitt (11a) und einen sich daran anschließenden zweiten geradlinigen Abschnitt (11b) aufweist und
1.6 die Schneidkante (11) innerhalb des ersten Abschnitts (11a) mit der Längsachse der Schraube einen ersten Winkel einschließt und
1.7 innerhalb des zweiten Abschnitts (11b) einen größeren Winkel als innerhalb des ersten Abschnitts (11a) einschließt, und
1.8 wobei der Bohrkopf (4) in Längsrichtung der Schraube verlaufende sich an die Schneidkanten (11) anschließende Nebenschneidkanten (6) aufweist,
**dadurch gekennzeichnet, dass**
1.9 die Nebenschneidkanten (6) durch die Schnittkante der Außenfläche (7) des Bohrkopfs (4) einerseits und einer inneren Fläche (8) des Bohrkopfs andererseits gebildet sind, wobei die Außenfläche (7) und die innere Fläche (8) einen Winkel einschließen, dessen Ergänzungswinkel (9) zu 90° etwa 25 bis 35° beträgt.

2. Schraube nach Anspruch 1, bei der der Winkel zwischen der Längsachse und der Schneidkante (11) im ersten Abschnitt zwischen 40 und 50° liegt.

3. Schraube nach Anspruch 1 oder 2, bei der der Winkel zwischen der Längsachse und der Schneidkante (11) im zweiten Abschnitt zwischen 60 und 80° liegt.

4. Schraube nach einem der vorhergehenden Ansprüche, bei der die axiale Erstreckung des Bohrkopfs (4) etwa dem zweifachen bis dreifachen der Steigung des Schraubengewindes (2) entspricht.

5. Schraube nach einem der vorhergehenden Ansprüche, bei der die Quererstreckung des Bohrkopfs (4) in Richtung der Schneidkanten (11) größer ist als der Durchmesser des Schafts (1) und kleiner als der Spitzendurchmesser des Schraubengewindes (2).

6. Schraube nach einem der vorhergehenden Ansprüche, bei der die Quererstreckung des Bohrkopfs (4) in Richtung quer zu den Schneidkanten (11) kleiner ist als der Durchmesser des Schafts (1).

7. Schraube nach einem der vorhergehenden Ansprüche, bei der die Nebenschneidkanten (6) parallel zur Längsachse der Schraube verlaufen.

8. Schraube nach einem der vorhergehenden Ansprüche, bei der der Abstand der radial äußeren Enden der von der Spitze (10) ausgehenden Abschnitte (11a) der Schneidkanten (11) voneinander zwischen etwa 70 % und etwa 80 % der Quererstreckung des Bohrkopfs (4) entspricht.

9. Schraube nach einem der vorhergehenden Ansprüche, bei der der Winkel zwischen der Längsachse der Schraube und der Schneidkante (11) im zweiten Abschnitt (11b) um etwa 25° größer ist als der Winkel zwischen der Längsachse der Schraube und der Schneidkante (11) im ersten Abschnitt (11a).

## Claims

1. Screw, having
1.1 a screw drive end,
1.2 a screw shank (1),
1.3 a screw thread (2) and having
1.4 a drilling head (4) which includes
1.5 two cutting edges (11) starting from a tip (10) of the screw, wherein
1.6 each cutting edge (11) has a first straight-lined section (11a) starting from the tip (10) and there adjoining a second straight-lined section (11b), and
1.6 within the first section (11a) the cutting edge (11) encloses a first angle with the longitudinal axis of the screw, and
1.7 within the second section (11b) encloses a greater angle than within the first section (11a), and
1.8 wherein the drilling head (4) has subordinate cutting edges (6) extending in the longitudinal direction of the screw and adjoining the cutting edges (11),
**characterized in that**
1.9 the subordinate cutting edges (6) are provided by the cutting edge of the outer surface (7) of the drilling head (4) on the one hand side and an inner surface (8) of the drilling head on the other hand side, wherein the outer surface (7) and the inner surface (8) enclose an angle which has a conjugate angle (9) to 90° of approximately 25 to 35°.

2. Screw according to claim 1, wherein the angle between the longitudinal axis and the cutting edge (11) in the first section is between 40 and 50°.

3. Screw according to claim 1 or 2, wherein the angle between the longitudinal axis and the cutting edge (11) in the second section is between 60 and 80°.

4. Screw according to any of the preceding claims, wherein the axial extension of the drilling head (4) corresponds approximately to twofold up to threefold the pitch of the screw thread (2).

5. Screw according to any of the preceding claims, wherein the transverse extension of the drilling head (4) in the direction of the cutting edges (11) is greater than the diameter of the shank (1) and smaller than the tip diameter of the screw thread (2).

6. Screw according to any of the preceding claims, wherein the transverse extension of the drilling head (4) in the direction transverse to the cutting edges (11) is smaller than the diameter of the shank (1).

7. Screw according to any of the preceding claims, wherein the subordinate cutting edges (6) extend in parallel to the longitudinal axis of the screw.

8. Screw according to any of the preceding claims, wherein the mutual distance of the radial outer ends of the sections (11a) of the cutting edges (11) starting from the tip (10) corresponds to between approximately 70 % and approximately 80 % of the transverse extension of the drilling head (4).

9. Screw according to any of the preceding claims, wherein the angle between the longitudinal axis of the screw and the cutting edge (11) in the second section (11b) is greater by approximately 25° than the angle between the longitudinal axis of the screw and the cutting edge (11) in the first section (11a).

## Revendications

1. Vis, avec
1.1 une extrémité d'entraînement de la vis,
1.2 une tige de vis (1),
1.3 un filet de vis (2), ainsi qu'avec
1.4 une tête de perçage (4), qui
1.5 présente deux arêtes de coupe (11) partant d'une pointe (10) de la vis, dans laquelle
1.6 chaque arête de coupe (11) présente une première partie rectiligne (11a) partant de la pointe (10) et une deuxième partie rectiligne (11b) se raccordant à celle-ci et
1.6 l'arête de coupe (11) à l'intérieur de la première partie (11a) forme un premier angle avec l'axe longitudinal de la vis
et
1.7 forme à l'intérieur de la deuxième partie (11b) un angle plus grand qu'à l'intérieur de la première partie (11a), et
1.8 dans laquelle la tête de perçage (4) présente des arêtes de coupe secondaires (6) s'étendant dans la direction longitudinale de la vis et se raccordant aux arêtes de coupe (11),
**caractérisée en ce que**
1.9 les arêtes de coupe secondaires (6) sont formées par le bord tranchant de la face extérieure (7) de la tête de perçage (4) d'une part et d'une face intérieure (8) de la tête de perçage d'autre part, dans laquelle la face extérieure (7) et la face intérieure (8) forment un angle, dont l'angle complémentaire à 90° (9) vaut environ 25 à 35°.

2. Vis selon la revendication 1, dans laquelle l'angle entre l'axe longitudinal et l'arête de coupe (11) dans la première partie se situe entre 40 et 50°.

3. Vis selon la revendication 1 ou 2, dans laquelle l'angle entre l'axe longitudinal et l'arête de coupe (11) dans la deuxième partie se situe entre 60 et 80°.

4. Vis selon l'une quelconque des revendications précédentes, dans laquelle l'extension axiale de la tête de perçage (4) correspond environ au double jusqu'au triple du pas du filet de vis (2).

5. Vis selon l'une quelconque des revendications précédentes, dans laquelle l'extension transversale de la tête de perçage (4) en direction des arêtes de coupe (11) est plus grande que le diamètre de la tige (1) et plus petite que le diamètre de crête du filet de vis (2) .

6. Vis selon l'une quelconque des revendications précédentes, dans laquelle l'extension transversale de la tête de perçage (4) dans la direction transversale aux arêtes de coupe (11) est plus petite que le diamètre de la tige (1).

7. Vis selon l'une quelconque des revendications précédentes, dans laquelle les arêtes de coupe secondaires (6) s'étendent parallèlement à l'axe longitudinal de la vis.

8. Vis selon l'une quelconque des revendications précédentes, dans laquelle la distance des extrémités radialement extérieures des parties (11a) des arêtes de coupe (11) partant de la pointe (10) l'une de l'autre vaut entre environ 70 % et environ 80 % de l'extension transversale de la tête de perçage (4).

9. Vis selon l'une quelconque des revendications précédentes, dans laquelle l'angle entre l'axe longitudinal de la vis et l'arête de coupe (11) dans la deuxième partie (11b) est environ 25° plus grand que l'angle entre l'axe longitudinal de la vis et l'arête de coupe (11) dans la première partie (11a).
